# FASCICULE DE BREVET EUROPEEN

(11) **EP 3 314 817 B1**
(45) Date de publication et mention de la délivrance du brevet: **21.02.2024**
(21) Numéro de dépôt: 16744437.1
(22) Date de dépôt: 24.06.2016
(51) Int. Cl.: H04L 67/12

(54) **PROCÉDÉ DE NOTIFICATION RELATIF À AU MOINS UNE OPÉRATION MISE EN OEUVRE PAR UN DISPOSITIF FORMANT NOEUD D'UN RÉSEAU**
BENACHRICHTIGUNGSVERFAHREN IN BEZUG AUF MINDESTENS EINE OPERATION, DIE DURCH EINE NETZWERKNOTENBILDENDE VORRICHTUNG IMPLEMENTIERT WIRD
NOTIFICATION METHOD RELATING TO AT LEAST ONE OPERATION IMPLEMENTED BY A DEVICE FORMING A NODE OF A NETWORK

(30) Priorité: 25.06.2015 FR 1555877
(43) Date de publication de la demande: 02.05.2018
(73) Titulaire: Orange, 92130 Issy-les-Moulineaux (FR)
(72) Inventeur: LAMPIN, Quentin, 92326 CHATILLON CEDEX (FR); BARTHEL, Dominique, 38190 Bernin (FR)
(86) Numéro de dépôt international: PCT/FR2016/051566
(87) Numéro de publication internationale: WO 2016/207575

(56) Documents cités:
- US-A1- 2004 223 485
- US-A1- 2006 152 355
- US-A1- 2011 090 334
- US-A1- 2014 259 168

## Description

Le domaine de l'invention est celui des télécommunications.

L'invention concerne plus particulièrement le domaine de l'observation des réseaux de communication en cours de fonctionnement pour en vérifier le comportement ou en mesurer les performances.

Elle s'applique particulièrement aux réseaux formés d'objets communicants contraints en ressources.

Des systèmes connus permettent d'observer l'état de chaque noeud d'un réseau. Dans ces systèmes, un serveur central, appelé NOC (« Network Operation Center »), s'informe sur des paramètres de fonctionnement et les mesures de performances en interrogeant explicitement les noeuds du réseau, c'est-à-dire les objets communicants, à travers le réseau en fonctionnement. Cette interrogation est en particulier effectuée au moyen de protocoles spécifiques tels que le protocole SNMP (pour « Simple Network Management Protocol »).

D'une part, cette technique nécessite l'utilisation de bande passante au niveau du réseau. La bande passante utilisée croit avec l'intensité de l'observation.

D'autre part, les interrogations étant asynchrones par rapports aux changements d'état internes des noeuds observés, le processus d'interrogation doit être intense pour espérer observer tous les états successifs, sans cependant qu'une garantie ne soit acquise.

Ceci a pour effets négatifs de consommer d'importantes ressources au niveau des noeuds observés dès qu'une observation fine est requise.

Ces systèmes sont bien adaptés aux réseaux de noeuds dans lesquels les noeuds disposent de fortes capacités en termes de bande passante et d'énergie.

En revanche, ils ne sont pas adaptés aux réseaux de noeuds dans lesquels les noeuds sont contraints en énergie et/ou en bande passante.
Le document US2011090334, divulgue un système d'alarme dans lequel des capteurs détectent des anomalies etremontent des alarmes à un contrôleur d'alarmes en cas de détection d'anomalies. Lorsqu'une anomalie est détectée, le contrôleur d'alarmes va envoyer un message 128 à une station de contrôle 102 viaun réseau de type IMS.
Le document US2006152355, divulgue un procédé mis en oeuvre au niveau d'un noeud de capteur situé au sein d'un réseau de capteurs, qui comprend le traitement d'un ensemble de relevés de capteurs pour déterminer siun événement s'estproduit.

Un des buts de l'invention est de remédier à des insuffisances/inconvénients de l'état de la technique et/ou d'y apporter des améliorations.

A cette fin, l'invention se rapporte à un procédé de notification mis en oeuvre par au moins un premier dispositif d'une pluralité de dispositifs formant noeuds d'un réseau, ledit premier dispositif étant apte à émettre à destination d'au moins un deuxième dispositif de la pluralité et/ou à recevoir d'au moins un deuxième dispositif de la pluralité, au moins un message de données via une première liaison de communication.

Selon l'invention, le procédé de notification comporte une étape de transmission, par ledit dispositif, ledit message de notification comportant un identifiant dudit premier dispositif, un identifiant de ladite entité fonctionnelle et un identifiant dudit message de données.

Des messages de notification sont émis par des dispositifs formant noeud d'un réseau. Chaque message de notification signale la réalisation d'au moins une opération par un dispositif formant noeud d'un réseau d'une pluralité de dispositifs formant noeuds de ce réseau.

Plus précisément, chaque message de notification comprend un identifiant de message, un identifiant de dispositif et un identifiant d'un module fonctionnel du dispositif.

Les différents messages de notification émis peuvent ensuite être analysés au niveau d'un dispositif ayant reçu les messages ou au niveau d'un dispositif apte à accéder aux messages de notification reçus.

Lors de cette analyse, l'identifiant de module fonctionnel (ie d'entité fonctionnelle) permet d'obtenir des détails sur le traitement d'un message de données reçu ou à émettre, réalisé par un dispositif formant noeud. Il est ainsi possible de détecter des problèmes de comportements d'un module fonctionnel particulier.

Il est possible par exemple d'identifier un dispositif défaillant par exemple en constatant qu'il ne réémet pas les messages de données qu'il reçoit.

Cette détection permet un dépannage plus rapide du dispositif mis en cause.

Les messages de données sont échangés via une première liaison de communication. L'émission des messages de notification via une deuxième liaison de communication différente de la première liaison permet de ne pas perturber l'échange de message de données via la première liaison de communication.

Selon une caractéristique particulière du procédé de notification, ledit identifiant de message est généré par ledit premier dispositif lors de la réception par ledit premier dispositif d'un message de données via la première liaison de communication ou lors de la création d'un message de données par le premier dispositif.

La réception d'un message de données, respectivement la création d'un message de données, est la première opération réalisée par un dispositif via à vis d'un message de données. L'identifiant de message généré est ensuite transmis avec le message de données lors du transfert d'un module fonctionnel du dispositif à un autre module fonctionnel de ce dispositif. Le message de données peut être modifié par un module fonctionnel alors que l'identifiant de message associé ne varie pas.

L'identifiant de message est unique au niveau d'un dispositif. Ceci permet d'identifier de façon certaine les traitements appliqués à un message de données reçu ou généré par le dispositif.

Selon une autre caractéristique particulière du procédé de notification, ledit message de notification comporte ledit message de données.

L'introduction d'un message de données dans les messages de notification permet de déterminer le trajet des messages de données entre dispositifs. Il permet notamment de savoir quel est ou quels sont les dispositifs ayant reçus un message de données émis par un dispositif. En effet, un message de données émis est reçu sans modification des données qu'il contient.

Selon une autre caractéristique particulière du procédé de notification, utilisée seule ou en combinaison avec les caractéristiques précédentes, ledit message de notification comprend un identifiant de ladite opération.

L'identifiant d'opération permet de connaitre précisément les traitements effectués par un dispositif.

Selon une autre caractéristique particulière du procédé de notification, utilisée seule ou en combinaison avec les caractéristiques précédentes, ledit message de notification comprend une date.

La datation des messages au niveau du dispositif permet d'établir de façon certaine la chronologie des messages de notification et, en conséquence, la chronologie des opérations effectuées.

Selon une autre caractéristique particulière du procédé de notification, utilisée seule ou en combinaison avec les caractéristiques précédentes, ledit au moins un message de notification est transmis via une deuxième liaison de communication.

Ainsi, les dispositifs formant noeuds du réseau communiquent avec les autres dispositifs du réseau via une première liaison et signalent la mise en oeuvre des opérations qu'ils réalisent via une autre liaison. L'utilisation d'une liaison de communication différente de la première liaison pour signaler la mise en oeuvre d'une opération permet de ne pas perturber l'échange de messages de données entre les différents dispositifs formant noeuds du réseau. Ceci permet ainsi d'observer le réseau dans des conditions réelles de fonctionnement.

Selon un mode de réalisation particulier, un message de notification signalant une opération est transmis par un dispositif formant noeud du réseau en synchronisation avec la mise en oeuvre de l'opération signalée.

Les messages sont émis spontanément par les dispositifs formant noeuds qui signalent ainsi l'exécution des opérations qu'ils réalisent.

L'invention se rapporte également à un procédé de traitement de messages de notification émis par au moins un premier dispositif d'une pluralité de dispositifs formant noeuds d'un réseau, ledit premier dispositif étant apte à émettre à destination d'au moins un deuxième dispositif de la pluralité et/ou à recevoir d'au moins un deuxième dispositif de la pluralité, au moins un message de données via une première liaison de communication.

Le procédé de traitement comporte les étapes suivantes mises en oeuvre par un dispositif de traitement :
- réception en provenance d'au moins un dispositif de la pluralité de dispositifs, d'une pluralité de messages de notification signalant au moins une opération (OP) relative à au moins un dit message de données et mise en oeuvre par une entité fonctionnelle dudit au moins un dispositif, ledit message de notification comportant un identifiant dudit dispositif, un identifiant de ladite entité fonctionnelle et un identifiant dudit message de données ; et
- détermination d'au moins une partie d'un trajet effectué par au moins un dit message de données au sein dudit réseau par analyse de messages de notification reçus.

Selon un mode de réalisation particulier du procédé de traitement, au moins certains desdits messages de notification reçus comprennent un dit message de données et ledit trajet comporte au moins une première partie de trajet au sein d'un dispositif de la pluralité de dispositifs et une deuxième partie de trajet entre un premier dispositif de ladite pluralité et un deuxième dispositif de ladite pluralité, ladite première partie de trajet étant déterminée en fonction d'identifiants de message de données contenus dans lesdits messages de notification et la dite deuxième partie étant déterminée par comparaison de messages de données contenus dans lesdits messages de notification.

L'invention se rapporte également à un dispositif formant noeud d'un réseau d'une pluralité de dispositifs formant noeuds dudit réseau, ledit dispositif étant apte à émettre à destination d'au moins un deuxième dispositif de la pluralité et/ou à recevoir d'au moins un deuxième dispositif de la pluralité, au moins un message de données via une première liaison de communication (L1),
caractérisé en qu'il comporte un module de communication, adapté pour transmettre un message de notification signalant au moins une opération relative à au moins un dit message de données et mise en oeuvre par une entité fonctionnelle dudit dispositif, ledit message de notification comportant un identifiant dudit dispositif, un identifiant de ladite entité fonctionnelle et un identifiant dudit message.

L'invention se rapporte également à un dispositif de traitement comportant:
- un module de réception d'une pluralité de messages de notification en provenance d'au moins un dispositif formant noeud d'un réseau d'une pluralité de dispositifs formant noeuds dudit réseau, ledit dispositif étant apte à émettre à destination d'au moins un deuxième dispositif de la pluralité et/ou à recevoir d'au moins un deuxième dispositif de la pluralité, au moins un message de données via une première liaison de communication,
   un dit message de notification signalant au moins une opération relative à au moins un dit message de données et mise en oeuvre par une entité fonctionnelle dudit dispositif, ledit message de notification comportant un identifiant dudit dispositif, un identifiant de ladite entité fonctionnelle et un identifiant dudit message ; et
- un module de traitement adapté pour analyser au moins certains des messages de notification reçus en vue de reconstituer au moins une partie d'un trajet effectué par au moins un dit message de données au sein dudit réseau.

Selon une implémentation préférée, les différentes étapes du procédé de notification, respectivement du procédé de traitement, selon l'invention sont mises en oeuvre par un logiciel ou programme d'ordinateur.

L'invention concerne ainsi un logiciel ou programme, susceptible d'être exécuté par un ordinateur ou par un processeur de données, ce logiciel / programme comportant des instructions pour commander l'exécution des étapes d'un procédé de notification ou d'un procédé de traitement. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en oeuvre par une ou plusieurs machines physiquement distinctes et présente globalement l'architecture d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.

L'invention concerne aussi un support d'informations lisible par un processeur de données, et comportant des instructions d'un programme tel que mentionné ci-dessus. Le support d'informations peut être n'importe quelle entité ou dispositif capable de stocker le programme.

D'autres particularités et avantages de la présente invention apparaitront dans la description suivante d'un mode de réalisation donné à titre d'exemple non limitatif, en référence aux dessins annexés, dans lesquels :
- la figure 1 est un schéma général illustrant un système selon un premier mode de réalisation de l'invention,
- la figure 2 est un schéma bloc représentant trois dispositifs formant noeud d'un réseau et un dispositif de traitement selon un mode de réalisation de l'invention,
- les figures 3a, 3b et 3c sont des organigrammes illustrant différentes étapes d'un procédé de notification et d'un procédé de traitement selon un premier mode de réalisation de l'invention,
- la figure 4 est un organigramme illustrant les différentes étapes d'un procédé de traitement selon un mode de réalisation de l'invention,
- la figure 5 est un tableau illustrant des messages de notification reçus selon un mode de réalisation de l'invention,
- la figure 6 est un organigramme illustrant les différentes étapes d'une étape d'analyse d'un procédé de traitement selon un mode de réalisation de l'invention,
- la figure 7 est un schéma illustrant des trajets effectués par des messages de données selon un mode de réalisation.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

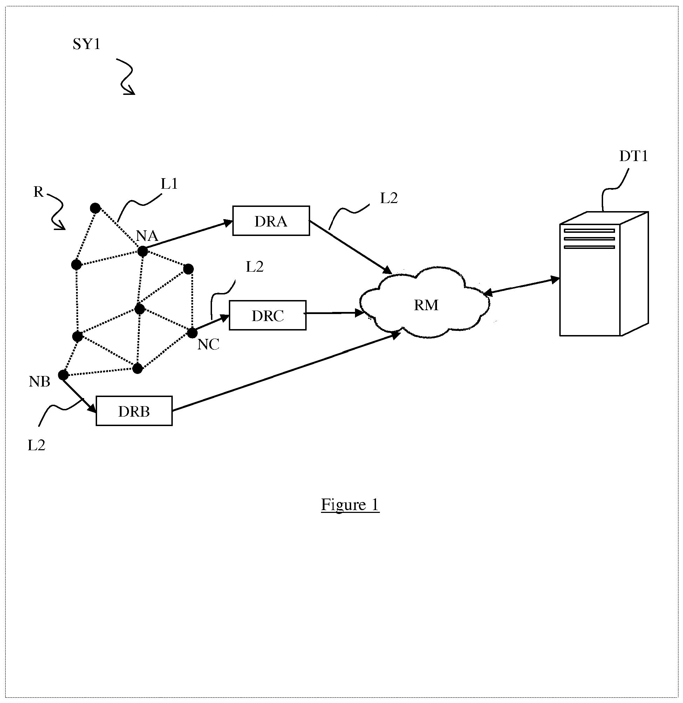

Un mode de réalisation d'un procédé de notification et d'un procédé de traitement va maintenant être décrit en référence aux figures 1 à 6.

La **figure 1** représente un système SY1 comprenant une pluralité de dispositifs NA, NB, NC... répartis dans une zone géographique et un dispositif de traitement DT1.

Un dispositif de la pluralité est par exemple un capteur, par exemple un capteur de mesures, tel qu'un compteur d'eau ou d'électricité.

Plus généralement, un tel dispositif est un objet communicant, c'est-à-dire un dispositif apte à transmettre des données à destination d'un ou plusieurs autres dispositifs de la pluralité et/ou à recevoir des données en provenance d'un autre dispositif de la pluralité.

Chaque dispositif de la pluralité est ainsi apte à communiquer avec un ou plusieurs autres dispositifs de la pluralité via une liaison de communication L1.

La liaison de communication L1 représente une première liaison de communication au sens de l'invention.

La liaison de communication L1 est par exemple une liaison sans fil, par exemple une liaison radio. La liaison de communication est par exemple de type Wifi ou de type Bluetooth A titre d'alternative, la liaison de communication L1 est une liaison filaire.

Les dispositifs NA, NB...sont ainsi organisés en un réseau de communication R et chaque dispositif NA, NB, NC... de la pluralité est un dispositif formant noeud de ce réseau R.

Chaque dispositif de la pluralité est apte à communiquer avec un autre dispositif de la pluralité soit directement soit par l'intermédiaire d'un ou plusieurs autres dispositifs de la pluralité.

Chaque dispositif de la pluralité est également apte à transmettre des informations destinées au dispositif de traitement DT1 via une liaison de communication L2.

La liaison de communication L2 représente une deuxième liaison de communication au sens de l'invention.

Dans le mode de réalisation décrit, les données transmises par un dispositif de la pluralité à destination du dispositif de traitement DT1 transitent par un dispositif relais associé à ce dispositif de la pluralité. Une deuxième liaison de communication est dans ce cas, une liaison reliant un dispositif de la pluralité et le dispositif de traitement DT1, via un dispositif relais.

Dans le mode de réalisation décrit, un dispositif relais est associé à chaque dispositif formant noeud et chaque dispositif relais est associé à un seul dispositif de la pluralité.

A titre d'alternative, un dispositif relais est associé à plusieurs dispositifs formant noeud.

Pour des raisons de clarté de la figure 1, seuls des dispositifs relais DRA, DRB et DRC respectivement associés aux dispositifs NA, NB et NC ont été représentés.

Les dispositifs relais sont aptes à communiquer avec le dispositif de traitement DT1 via un réseau de communication RM.

Dans le mode de réalisation décrit, la deuxième liaison L2 est différente de la première liaison L1.

Par exemple, la première liaison de communication L1 est une liaison radio d'une première fréquence prédéterminée et la liaison de communication L2 entre un dispositif de la pluralité et le dispositif relais associé est une liaison radio d'une deuxième fréquence prédéterminée.

A titre d'alternative, la première liaison de communication L1 est une liaison sans fil de type Wifi, Bluetooth... ou encore une liaison filaire.

Egalement, à titre d'alternative, la liaison de communication L2 est une liaison sans fil en champ proche, une liaison sans fil de type Wifi ou Bluetooth, une liaison filaire...

Egalement, à titre d'alternative, les dispositifs formant noeud et les dispositifs relais associés communiquent via la première liaison de communication L1.

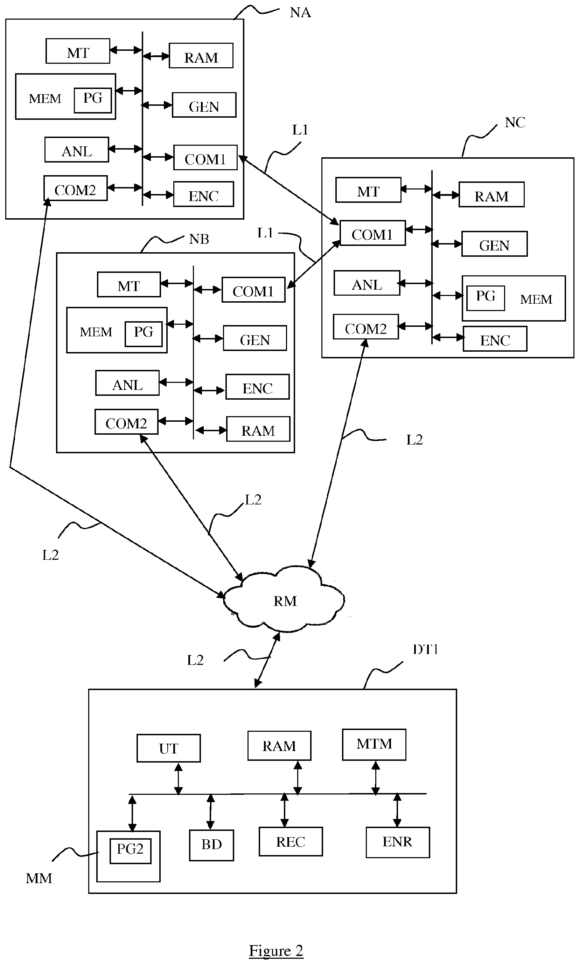

La **figure 2** est un schéma bloc représentant les dispositifs NA, NB et NC de la pluralité de dispositifs et le dispositif de traitement DT1 selon un mode de réalisation.

Chaque dispositif de la pluralité comprend dans le mode de réalisation décrit, un module de génération GEN, un module d'analyse ANL, un module d'encapsulation ENC, un premier module de communication COM1 et un deuxième module de communication COM2.

Le premier module de communication COM1 est apte à recevoir et à émettre des signaux sur la liaison de communication L1. Il est ainsi apte à recevoir des signaux d'un autre dispositif du réseau R et à émettre des signaux à destination d'un autre dispositif du réseau R ou du dispositif de collecte DC.

Le module de génération GEN est par exemple une entité applicative apte à générer des messages de données applicatives.

Le module d'analyse ANL est par exemple une entité applicative apte à traiter des données applicatives reçues.

Le module d'encapsulation ENC est par exemple une entité apte à encapsuler les messages applicatifs provenant du module de génération GEN ou du module d'analyse ANL et à décapsuler les messages applicatifs (c'est-à-dire à extraire les données applicatives) destinés au premier module de communication COM1.

Chaque dispositif NA, NB, NC comprend ainsi plusieurs modules ou entités fonctionnelles, ici quatre entités fonctionnelles GEN, ANL, ENC, COM1 adaptées pour traiter des messages de données reçus ou à émettre via la liaison de communication L1.

Aucune limitation n'est attachée au nombre et à la nature des entités fonctionnelles.

Dans la présente description, les termes modules et entités sont équivalents.

Chaque dispositif NA, NB, NC comporte également un deuxième module de communication COM2 pour communiquer via la liaison de communication L2 avec le dispositif de traitement DT1.

Le deuxième module de communication COM2 est apte à émettre des messages de notification via la liaison de communication L2.

Chaque dispositif de la pluralité comporte également de façon connue, notamment une unité de traitement MT équipée d'un microprocesseur, une ou plusieurs mémoires de stockage MEM, par exemple de type EEPROM, et une mémoire vive de type RAM.

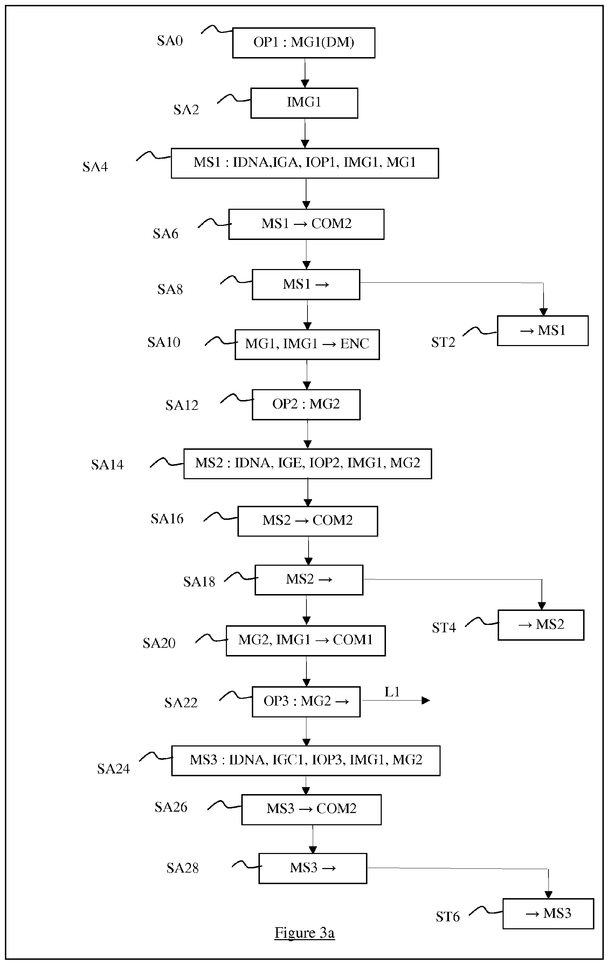

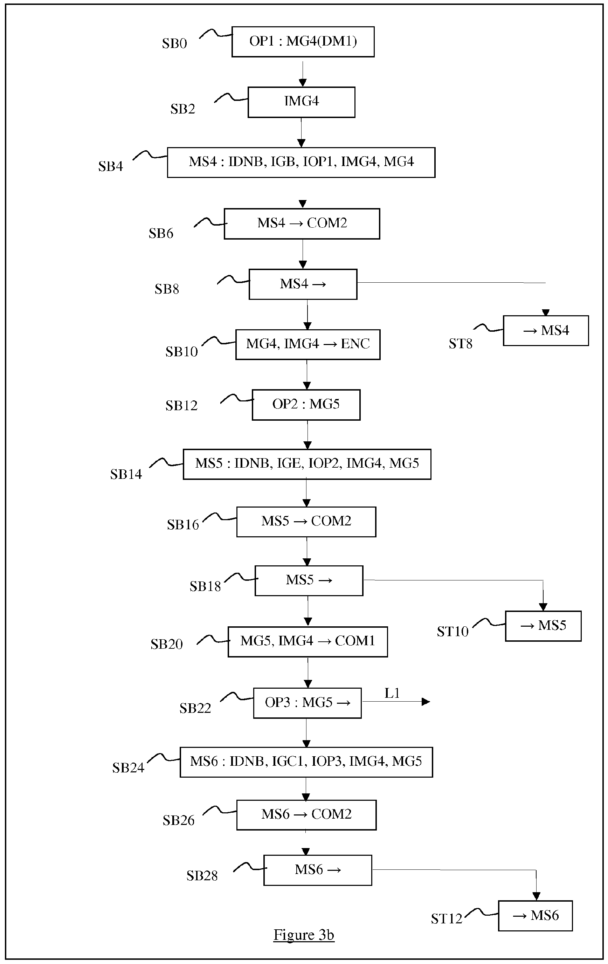

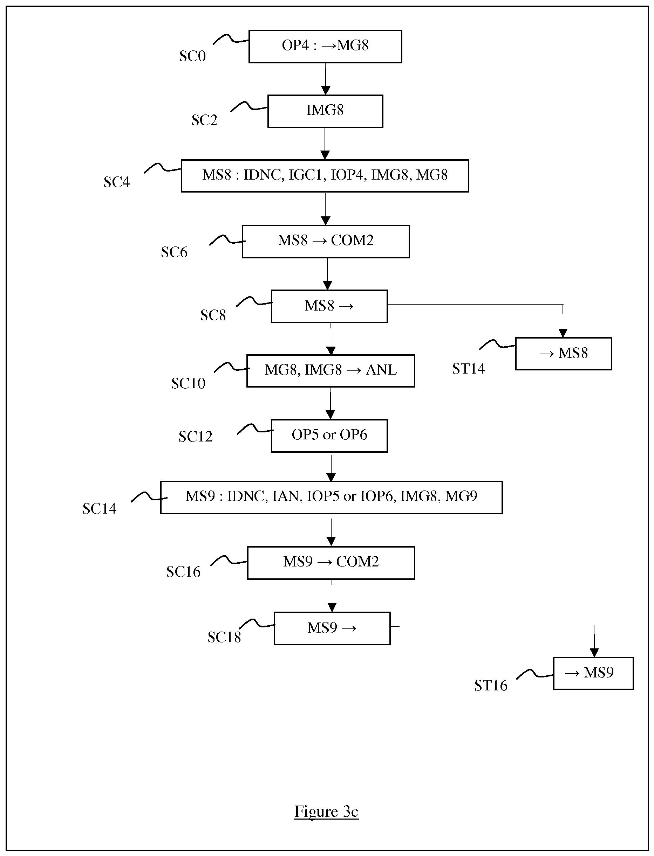

La mémoire de stockage MEM comporte des registres mémorisant un programme d'ordinateur PG comportant des instructions de programme adaptées à mettre en oeuvre un procédé de notification selon un mode de réalisation de l'invention décrit ultérieurement en référence aux figures 3a, 3b et 3c.

Le dispositif de traitement DT1 comporte une unité de traitement UT équipée d'un microprocesseur, une ou plusieurs mémoires de stockage MM, par exemple de type EEPROM, et une mémoire vive de type RAM.

Le dispositif de traitement DT1 comporte notamment une mémoire de stockage BD.

Le dispositif de traitement DT1 comporte également un module de réception REC, un module d'enregistrement ENR et un module de traitement de messages MTM.

Le dispositif de traitement DT1 peut comporter de manière classique et non exhaustive les éléments suivants: un clavier, un écran de visualisation, un module d'affichage pour l'affichage sur l'écran de visualisation...

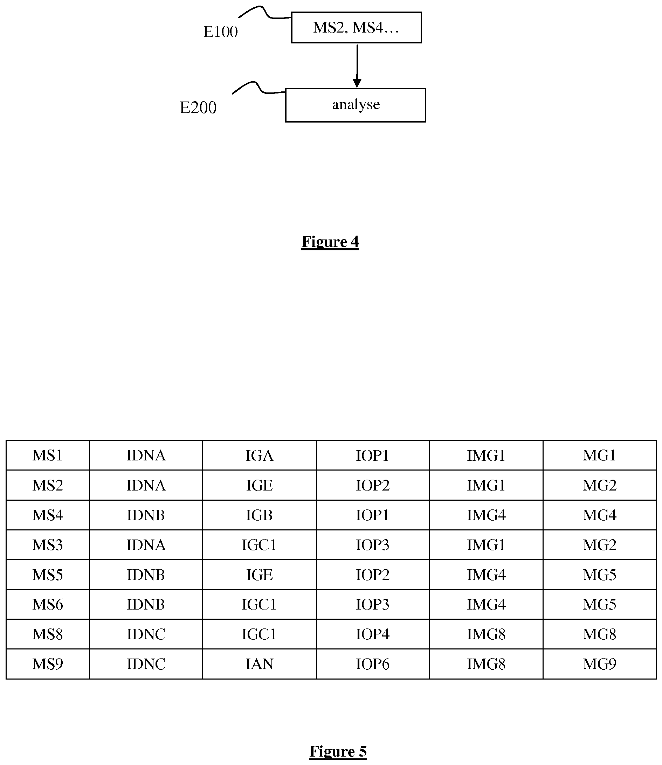

La mémoire de stockage MM comporte des registres mémorisant un programme d'ordinateur PG2 comportant des instructions de programme adaptées à mettre en oeuvre un procédé de traitement selon un mode de réalisation de l'invention décrit ultérieurement en référence à la figure 5.

Un mode de réalisation d'un procédé de notification mis en œuvre au sein du système SY1, va maintenant être décrit en référence aux figures 3a, 3b et 3c.

En référence à la **figure 3a****,** lors d'une étape SA0, le module de génération GEN du dispositif NA génère un premier message de données MG1. Le message MG1 contient par exemple de données de mesures DM réalisées par le dispositif NA. Les données de mesures DM sont par exemple obtenues au moyen d'une sonde du dispositif NA.

La génération du message de données MG1 représente une opération OP1 relative au message de données MG1.

Lors d'une étape SA2, le module de génération GEN du dispositif NA génère un identifiant de message IMG1.

L'identifiant de message IMG1 est un identifiant unique au niveau du dispositif NA.

Puis, lors d'une étape SA4, le module de génération GEN du dispositif NA construit un message de notification MS1.

Le message de notification MS1 contient un identifiant IDNA du dispositif NA, un identifiant IGA du module de génération GEN du dispositif NA, un identifiant IOP1 de l'opération OP1 mise en oeuvre lors de l'étape SA0, l'identifiant de message IMG1 et le message de données MG1.

Le message de notification MS1 peut également contenir une information temporelle, par exemple une date à laquelle l'opération OP1 a été mise en oeuvre.

L'étape SA4 est suivie d'une étape SA6 lors de laquelle le message de notification MS1 est transmis par le module de génération GEN du dispositif NA au deuxième module de communication COM2 du dispositif NA.

Le message de notification MS1 est par exemple généré et transmis simultanément à la mise en oeuvre de l'opération OP1.

Lors d'une étape SA8, le deuxième module de communication COM2 émet le message de notification MS1 à destination du dispositif de traitement DT1 via la liaison de communication L2.

Le message de notification MS1 signale la mise en oeuvre de l'opération OP1.

Il est transmis spontanément par le dispositif NA, via la liaison de communication L2.

Le message de notification MS1 est reçu par le dispositif de traitement DT1 lors d'une étape ST2.

Lors d'une étape SA10, le module de génération GEN du dispositif NA envoie le message de données MG1 et l'identifiant de message IMG1 au module d'encapsulation ENC du dispositif NA.

Lors d'une étape SA12, suite à la réception du message de données MG1, le module d'encapsulation ENC du dispositif NA construit un deuxième message de données MG2 à partir du message de données MG1 reçu. L'étape SA12 consiste par exemple à rajouter des données, par exemple des données d'entête aux données de mesure DM du message de données MG1.

A titre d'alternative, l'étape SA12 est une étape consistant à changer le format des données du message MG1.

La construction du message de données MG2 représente une opération OP2 relative au message de données MG1.

Lors d'une étape SA14, le module d'encapsulation ENC du dispositif NA construit un message de notification MS2. Le message de notification MS2 contient l'identifiant IDNA du dispositif NA, un identifiant IGE du module d'encapsulation ENC du dispositif NA, un identifiant IOP2 de l'opération OP2, l'identifiant de message IMG1 reçu du module de génération GEN et le message de données MG2.

L'étape SA14 est suivie d'une étape SA16 lors de laquelle le message de notification MS2 est transmis par le module d'encapsulation ENC du dispositif NA au deuxième module de communication COM2 du dispositif NA.

Lors d'une étape SA18, le deuxième module de communication COM2 émet le message de notification MS2 à destination du dispositif de traitement DT1 via la liaison de communication L2.

Le message de notification MS2 signale la mise en oeuvre de l'opération OP2 par le module d'encapsulation ENC du dispositif NA.

Le message de notification MS2 est reçu par le dispositif d'observation lors d'une étape ST4.

Lors d'une étape SA20, le module d'encapsulation ENC du dispositif NA envoie le message MG2 et l'identifiant de message IMG1 au premier module de communication COM1 du dispositif NA.

Lors d'une étape SA22, suite à la réception du message MG2, le premier module de communication COM1 du dispositif NA génère un signal correspondant au message MG2 à partir du message MG2 reçu et transmet ce signal via la liaison de communication L1.

La transmission du signal généré représente une opération OP3 relative au message de données MG1.

Lors d'une étape ST24, le premier module de communication COM1 du dispositif NA construit un message de notification MS3. Le message de notification MS3 contient l'identifiant IDNA du dispositif NA, un identifiant IGC1 du premier module de communication COM1 du dispositif NA, un identifiant IOP3 de l'opération OP3, l'identifiant de message IMG1 reçu du module d'encapsulation ENC et le message de données MG2.

A titre d'alternative, le premier module de communication COM1 modifie le message MG2 avant envoi via la liaison de communication L1. Dans ce cas, le message de données contenu dans le message de notification MS3 est le message MG2 modifié.

L'étape SA24 est suivie d'une étape SA26 lors de laquelle le message de notification MS3 est transmis par le premier module de communication COM1 du dispositif NA au deuxième module de communication COM2 du dispositif NA.

Lors d'une étape SA28, le deuxième module de communication COM2 émet le message de notification MS3 à destination du dispositif d'observation DT1 via la liaison de communication L2.

Le message de notification MS3 signale la mise en oeuvre de l'opération OP3 par le premier module de communication COM1 du dispositif NA.

Le message de notification MS3 est reçu par le dispositif d'observation lors d'une étape ST6.

Les étapes SA0 à SA28 et ST2 à ST6 sont réitérées lors de la mise en oeuvre d'une ou plusieurs autres générations de message de données par le dispositif NA.

Les étapes SA2, SA4, SA6, SA8, SA14, SA16, SA18, SA24, SA26 et SA28, mises en oeuvre par le dispositif NA, représentent des étapes du procédé de notification.

En référence à la **figure 3b****,** lors d'une étape SB0, similaire à l'étape SA0, le module de génération GEN du dispositif NB génère un message de données MG4. Le message MG4 contient par exemple de données de mesures DM1 réalisées par le dispositif NB.

La génération du message de données MG4 représente l'opération OP1.

L'étape SB0 est mise en oeuvre indépendamment des étapes SA0 à SA28. Elle est par exemple mise en oeuvre très peu de temps après l'étape SA0.

Lors d'une étape SB2, le module de génération GEN du dispositif NB génère un identifiant de message IMG4.

L'identifiant de message IMG4 est un identifiant unique au niveau du dispositif NB.

Puis, lors d'une étape SB4, similaire à l'étape SA4, le module de génération GEN du dispositif NB construit un message de notification MS4.

Le message de notification MS4 contient un identifiant IDNB du dispositif NB, un identifiant IGB du module de génération GEN du dispositif NB, l'identifiant IOP1 de l'opération OP1, l'identifiant de message IMG4 et le message de données MG4.

L'étape SB4 est suivie d'une étape SB6 lors de laquelle le message de notification MS4 est transmis par le module de génération GEN du dispositif NB au deuxième module de communication COM2 du dispositif NB.

Lors d'une étape SB8, le deuxième module de communication COM2 émet le message de notification MS4 à destination du dispositif de traitement DT1 via la liaison de communication L2.

Le message de notification MS4 signale la mise en oeuvre de l'opération OP1 par le dispositif NB.

Le message de notification MS4 est reçu par le dispositif d'observation DT1 lors d'une étape ST8.

Lors d'une étape SB10, similaire à l'étape SA10, le module de génération GEN du dispositif NB envoie le message de données MG4 et l'identifiant de message IMG4 au module d'encapsulation ENC du dispositif NB.

Lors d'une étape SB12, suite à la réception du message de données MG4, le module d'encapsulation ENC du dispositif NB construit un deuxième message de données MG5 à partir du message MG4 reçu. L'étape SB12 comprend par exemple l'ajout de données, par exemple des données d'entête aux données de mesure DM1 du message de données MG4.

La construction du message de données MG2 représente l'opération OP2.

Lors d'une étape SB14, le module d'encapsulation ENC du dispositif NB construit un message de notification MS5. Le message de notification MS2 contient l'identifiant IDNB du dispositif NB, un identifiant IGE du module d'encapsulation ENC du dispositif NB, l'identifiant IOP2 de l'opération OP2, l'identifiant de message IMG4 reçu du module de génération GEN et le message de données MG5.

L'étape SB14 est suivie d'une étape SB16 lors de laquelle le message de notification MS5 est transmis par le module d'encapsulation ENC du dispositif NB au deuxième module de communication COM2 du dispositif NB.

Lors d'une étape SB18, le deuxième module de communication COM2 émet le message de notification MS5 à destination du dispositif de traitement DT1 via la liaison de communication L2.

Le message de notification MS5 signale la mise en oeuvre de l'opération OP2 par le module d'encapsulation ENC du dispositif NB.

Le message de notification MS5 est reçu par le dispositif d'observation lors d'une étape ST10.

Lors d'une étape SB20, le module d'encapsulation ENC du dispositif NB envoie le message MG5 et l'identifiant de message IMG4 au premier module de communication COM1 du dispositif NB.

Lors d'une étape SB22, suite à la réception du message MG5, le premier module de communication COM1 du dispositif NB génère un signal correspondant au message MG5 reçu et transmet ce signal via la liaison de communication L1.

La transmission du signal généré représente l'opération OP3.

Lors d'une étape SB24, le premier module de communication COM1 du dispositif NB construit un message de notification MS6. Le message de notification MS6 contient l'identifiant IDNB du dispositif NB, l'identifiant IGC1 du premier module de communication COM1 du dispositif NB, l'identifiant IOP3 de l'opération OP3, l'identifiant de message IMG4 reçu du module d'encapsulation et le message de données MG5.

L'étape SB24 est suivie d'une étape SB26 lors de laquelle le message de notification MS6 est transmis par le premier module de communication COM1 du dispositif NB au deuxième module de communication COM2 du dispositif NB.

Lors d'une étape SB28, le deuxième module de communication COM2 émet le message de notification MS6 à destination du dispositif de traitement DT1 via la liaison de communication L2.

Le message de notification MS6 signale la mise en oeuvre de l'opération OP3 par le premier module de communication COM1 du dispositif NB.

Le message de notification MS6 est reçu par le dispositif d'observation lors d'une étape ST12.

Les étapes SB0 à SB28 et ST8 à ST12 sont réitérées lors de la mise en oeuvre d'une ou plusieurs autres générations de message de données par le dispositif NB.

Les étapes SB2, SB4, SB6, SB8, SB14, SB16, SB18, SB24, SB26 et SB28, mises en oeuvre par le dispositif NB, représentent des étapes du procédé de notification.

En référence à la **figure 3c****,** lors d'une étape SC0, un message de données MG8 est reçu par le dispositif NC. Plus précisément, le message de données MG8 est reçu via la première liaison de communication L1 par le premier module de communication COM1 du dispositif NC.

La réception du message de données MG4 représente une opération OP4.

Lors d'une étape SC2, le premier module de communication COM1 du dispositif NC génère un identifiant de message IMG8.

L'identifiant de message IMG8 est un identifiant unique au niveau du dispositif NC.

Puis, lors d'une étape SC4, le premier module de communication COM1 du dispositif NC construit un message de notification MS8.

Le message de notification MS8 contient un identifiant IDNC du dispositif NC, un identifiant IGC1 du premier module de communication COM1 du dispositif NC, un identifiant IOP4 de l'opération OP4, l'identifiant de message IMG8 et le message de données MG8.

L'étape SC4 est suivie d'une étape SC6 lors de laquelle le message de notification MS8 est transmis par le premier module de communication COM1 du dispositif NC au deuxième module de communication COM2 du dispositif NC.

Lors d'une étape SC8, le deuxième module de communication COM2 émet le message de notification MS8 à destination du dispositif de traitement DT1 via la liaison de communication L2.

Le message de notification MS8 signale la mise en oeuvre de l'opération OP4.

Le message de notification MS8 est reçu par le dispositif d'observation DT1 lors d'une étape ST14.

Lors d'une étape SC10, le premier module de communication COM1 du dispositif NC envoie le message de données MG8 et l'identifiant de message IMG8 au module d'analyse ANL du dispositif NC.

Lors d'une étape SC12, suite à la réception du message de données MG8, le module d'analyse ANL du dispositif NC traite le message MG8 reçu.

Lors de ce traitement, il peut par exemple transmettre le message au module d'encapsulation ENC du dispositif NC. Il réalise alors une opération OP5.

Il peut également effectuer un autre traitement sur les données du message MG8, par exemple enregistrer ces données sans transmettre le message au module d'encapsulation ENC du dispositif NC. Il réalise alors une opération OP6.

L'étape SC12 est suivie d'une étape SC14 lors de laquelle le module d'analyse ANL du dispositif NC construit un message de notification MS9.

Le message de notification MS9 contient l'identifiant IDNC du dispositif NC, un identifiant IAN du module d'analyse ANL du dispositif NC, un identifiant IOP5 ou IOP6 de l'opération mise en oeuvre lors de l'étape SC12, l'identifiant de message IMG8 et le message de données MG9.

L'étape SC14 est suivie d'une étape SC16 lors de laquelle le message de notification MS9 est transmis par le module d'analyse ANL du dispositif NC au deuxième module de communication COM2 du dispositif NC.

Lors d'une étape SB18, le deuxième module de communication COM2 émet le message de notification MS9 à destination du dispositif de traitement DT1 via la liaison de communication L2.

Le message de notification MS9 signale la mise en oeuvre de l'opération OP5 ou OP6 par le module d'analyse ANL du dispositif NC.

Le message de notification MS9 est reçu par le dispositif d'observation DT1 lors d'une étape ST16.

Les étapes SC2, SC4, SC6, SC8, SC14, SC16 et SC18 mises en oeuvre par le dispositif NC, représentent des étapes du procédé de notification.

Les étapes ST2 à ST16 mises en oeuvre par le dispositif de traitement DT1, représentent des étapes du procédé de traitement.

Un mode de réalisation d'un procédé de traitement va maintenant être décrit en référence à la **figure 4****.**

Lors d'une étape E100, des messages de notification sont reçus par le module de réception REC du dispositif de traitement DT1.

L'étape E100 comporte par exemple les étapes ST2 à ST14 décrite précédemment en relation avec les figures 3a, 3b, 3c.

La **figure 5** représente un tableau récapitulant les messages de notifications MS1 à MS9 reçus par le dispositif de traitement DT1 lors des étapes ST2 à ST16.

Les messages de notification sont par exemple enregistrés dans une mémoire, par exemple la mémoire de stockage BD, du dispositif de traitement DT1 au fur et à mesure de leur réception par le dispositif de traitement DT1.

Les messages sont par exemple enregistrés en association avec une date de réception ajoutée par le dispositif de traitement DT1.

A titre d'alternative, les messages reçus comportent une date.

Lors d'une étape E200, tout ou partie des messages de notification reçus est analysé par le module de traitement MTM du dispositif de traitement DT1 pour par exemple vérifier le comportement des différents dispositifs ou déterminer la trajectoire de tout ou partie des messages de données transmis dans le réseau R.

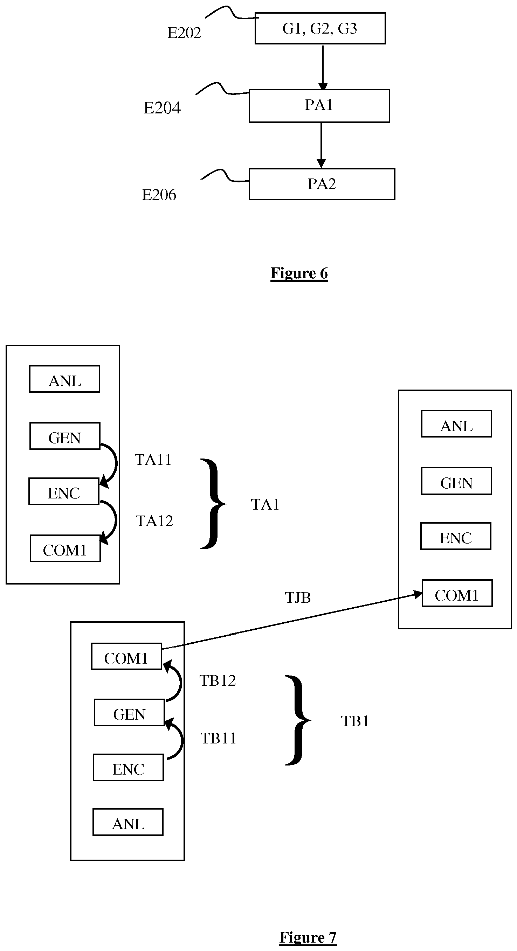

Un mode de réalisation particulier de l'étape d'analyse E200 va maintenant être décrit en référence à la **figure 6****.**

L'analyse effectuée ici est une détermination d'une trajectoire de messages de données et comprend les étapes E202 à E206.

Lors d'une étape E202, le module de traitement MTM regroupe les messages de notification reçus comportant un même identifiant de message et un même identifiant de dispositif. Il obtient ainsi dans le cas de l'exemple du tableau de la figure 5, trois groupes G1, G2 et G3. Le premier groupe G1 contient les messages de notification comportant l'identifiant de message IMG1 et l'identifiant de dispositif NA. Le deuxième groupe G2 contient les messages de notification comportant l'identifiant de message IMG4 et l'identifiant de dispositif NB. Le troisième groupe G3 contient les messages de notification comportant l'identifiant de message IMG8 et l'identifiant de dispositif NC.

Un groupe créé G1, G2 ou G3 contient ainsi tous les messages de notification émis par un dispositif relativement à un identifiant de message généré par ce dispositif, c'est-à-dire relativement à un message de données reçu ou créé par ce dispositif.

Lors d'une étape E204, le module de traitement MTM classe les messages de chaque groupe en fonction de la date associée aux messages ou de l'ordre d'arrivée au niveau du dispositif de traitement DT1. Grâce à l'identifiant d'entités, il obtient une première partie de trajet PA1 correspondant au trajet effectué par un message de données à l'intérieur d'un dispositif.

Lors d'une étape E206, le module de traitement MTM détermine une deuxième partie de trajet PA2 correspondant au trajet des messages entre dispositifs.

Le trajet d'un message entre un premier dispositif et un deuxième dispositif est obtenu par comparaison des messages de données contenus dans les messages de notification signalant l'envoi d'un message de données via la première liaison de communication L1 avec les messages de données contenus dans les messages de notification signalant la réception d'un message de données via la première liaison de communication L1.

En d'autres termes, les messages de données contenus dans les messages de notification contenant l'identifiant d'opération OP4 sont comparés avec les messages de données contenus dans les messages de notification contenant l'identifiant d'opération OP3.

Par exemple, le message de données MG8 compris dans le message MS8 est comparé au message de données MG2 compris dans le message MS3 et au message de données MG5 compris dans le message MS6.

Les messages de données MG8 et MG5 étant identiques, le module de traitement MTM détermine que le message de données émis par le dispositif NB a été reçu par le dispositif NC.

La **figure 7** illustre un trajet effectué par le message de données créé par le dispositif NA et un trajet effectué par le message de données créé par le dispositif NB.

Le trajet effectué par le message de données créé par le dispositif NA est un trajet TA1 effectué par un message de données au sein du dispositif NA. Ce trajet TA1 comporte des sous trajets TA11 et TA12.

Le trajet effectué par le message de données créé par le dispositif NB comporte une première partie de trajet TB1 effectué par un message de données au sein du dispositif NB et une deuxième partie de trajet TJB entre le dispositif NB et le dispositif NC. La première partie de trajet TB1 comporte des sous trajets TB11 et TB12.

Dans le mode de réalisation décrit, les opérations mises en oeuvres et signalées par les dispositifs formant noeuds sont la génération d'un message de données, la réception ou l'envoi d'un message de données, le traitement d'un message de données par le module d'encapsulation, le traitement d'un message de données reçu.

D'autres opérations peuvent être signalées.

Dans le mode de réalisation décrit, chaque entité fonctionnelle ne signale qu'une opération pour un message de données.

En variante, une entité fonctionnelle peut signaler plusieurs opérations pour un même message de données. Par exemple, elle peut signaler la prise en charge d'un message de données, son traitement puis l'envoi du message à une autre entité fonctionnelle.

Dans les exemples de réalisation décrit, chaque message de notification transmis à destination du dispositif de traitement DT1 signale une seule opération.

A titre d'alternative, un message de notification peut signaler plusieurs opérations.

Dans le mode de réalisation décrit, chaque message de notification comporte un message de données associé. En variante, seuls, les messages signalant la réception ou l'émission de données via la liaison de communication L1 comporte un message de données associé.

Dans le mode de réalisation décrit, les messages signalant des opérations mises en oeuvre au sein d'un dispositif formant noeud transitent entre le dispositif formant noeud et le dispositif de traitement DT1, via un dispositif relais.

En variante, les messages sont émis via la première liaison de communication et le réseau R et reçus par le dispositif de traitement DT1, sans transiter par un dispositif relais.

Dans le mode de réalisation décrit, les messages de notification sont reçus et analysés par un même équipement, le dispositif de traitement DT1.

A titre d'alternative, les messages de notification sont reçus et enregistrés par un premier équipement et analysés par un deuxième équipement. Dans ce cas, les messages de notification sont enregistrés par le premier équipement dans une mémoire accessible par le deuxième équipement, par exemple une zone mémoire spécifique d'un réseau de télécommunication.

## Revendications

1. Procédé de notification mis en oeuvre par au moins un premier capteur (NA) d'une pluralité de capteurs (NA, NB, NC) formant noeuds d'un réseau (R), ledit premier capteur (NA) étant apte à émettre à destination d'au moins un deuxième capteur de la pluralité et/ou à recevoir d'au moins un deuxième capteur de la pluralité, au moins un message de données via une première liaison de communication (L1),
caractérisé en qu'il comporte une étape de transmission, par ledit premier capteur, d'au moins un message de notification signalant au moins une opération (OP1) relative à au moins un dit message de données et mise en oeuvre par une entité fonctionnelle dudit premier capteur, ledit message de notification comportant un identifiant dudit premier capteur, un identifiant de ladite entité fonctionnelle et un identifiant dudit message de données.

2. Procédé de notification selon la revendication 1 dans lequel ledit identifiant de message est généré par ledit premier capteur lors de la réception par ledit premier capteur d'un message de données via la première liaison de communication ou lors de la création d'un message de données par le premier capteur.

3. Procédé de notification selon l'une des revendications 1 ou 2 dans lequel ledit message de notification comporte ledit message de données.

4. Procédé de notification selon l'une des revendications précédentes dans lequel ledit message de notification comprend un identifiant de ladite opération.

5. Procédé de notification selon l'une des revendications précédentes dans lequel ledit message de notification comprend une date.

6. Procédé de notification selon l'une des revendications précédentes dans lequel ledit au moins un message de notification est transmis via une deuxième liaison de communication.

7. Procédé de traitement de messages de notification émis par au moins un premier capteur (NA) d'une pluralité de capteurs (N1, N2, N3) formant noeuds d'un réseau (R), ledit premier capteur étant apte à émettre à destination d'au moins un deuxième capteur de la pluralité et/ou à recevoir d'au moins un deuxième capteur de la pluralité, au moins un message de données via une première liaison de communication (L1),
**caractérisé en ce qu'**il comporte les étapes suivantes mises en oeuvre par un dispositif de traitement :
- obtention d'une pluralité de messages de notification émis par moins un capteur de la pluralité de capteurs, un dit message de notification signalant au moins une opération (OP) relative à au moins un dit message de données et mise en oeuvre par une entité fonctionnelle dudit au moins un capteur, ledit message de notification comportant un identifiant dudit capteur, un identifiant de ladite entité fonctionnelle et un identifiant dudit message de données ; et
- détermination d'au moins une partie d'un trajet effectué par au moins un dit message de données au sein dudit réseau par analyse de messages de notification reçus.

8. Procédé de traitement selon la revendication 7 dans lequel au moins certains desdits messages de notification reçus comprennent un dit message de données et dans lequel ledit trajet comporte au moins une première partie de trajet au sein d'un capteur de la pluralité de capteurs et une deuxième partie de trajet entre un premier capteur de ladite pluralité et un deuxième capteur de ladite pluralité, ladite première partie de trajet étant déterminée en fonction d'identifiants de message de données contenus dans lesdits messages de notification et la dite deuxième partie étant déterminée par comparaison de messages de données contenus dans lesdits messages de notification.

9. Capteur formant noeud (NA) d'un réseau (R) d'une pluralité de capteurs formant noeuds (N1, N2, N3) dudit réseau, ledit capteur (NA) étant apte à émettre à destination d'au moins un deuxième capteur de la pluralité et/ou à recevoir d'au moins un deuxième capteur de la pluralité, au moins un message de données via une première liaison de communication (L1),
caractérisé en qu'il comporte un module de communication (COM2), adapté pour transmettre un message de notification signalant au moins une opération (OP1) relative à au moins un dit message de données et mise en oeuvre par une entité fonctionnelle dudit capteur, ledit message de notification comportant un identifiant dudit capteur, un identifiant de ladite entité fonctionnelle et un identifiant dudit message.

10. Dispositif de traitement (DT1) caractérisé en qu'il comporte:
- un module d'obtention d'une pluralité de messages de notification en provenance d'au moins un capteur formant noeud d'un réseau (R) d'une pluralité de capteur (N1, N2, N3) formant noeuds dudit réseau, ledit capteur étant apte à émettre à destination d'au moins un deuxième capteur de la pluralité et/ou à recevoir d'au moins un deuxième capteur de la pluralité, au moins un message de données via une première liaison de communication (L1),
un dit message de notification signalant au moins une opération (OP) relative à au moins un dit message de données et mise en oeuvre par une entité fonctionnelle dudit capteur, ledit message de notification comportant un identifiant dudit capteur, un identifiant de ladite entité fonctionnelle et un identifiant dudit message ; et
- un module de traitement adapté pour analyser au moins certains des messages de notification reçus en vue de reconstituer au moins une partie d'un trajet effectué par au moins un dit message de données au sein dudit réseau.

## Patentansprüche

1. Benachrichtigungsverfahren, das von mindestens einem ersten Sensor (NA) einer Vielzahl von Sensoren (NA, NB, NC) durchgeführt wird, die Knoten eines Netzwerks (R) bilden, wobei der erste Sensor (NA) fähig ist, mindestens eine Datennachricht über eine erste Kommunikationsverbindung (L1) an mindestens einen zweiten Sensor der Vielzahl zu senden und/oder von mindestens einem zweiten Sensor der Vielzahl zu empfangen,
**dadurch gekennzeichnet, dass** es einen Schritt der Übertragung, durch den ersten Sensor, mindestens einer Benachrichtigungsnachricht aufweist, die mindestens einen Vorgang (OP1) anzeigt, der sich auf mindestens eine Datennachricht bezieht und von einer Funktionsentität des ersten Sensors durchgeführt wird, wobei die Benachrichtigungsnachricht eine Kennung des ersten Sensors, eine Kennung der Funktionsentität und eine Kennung der Datennachricht aufweist.

2. Benachrichtigungsverfahren nach Anspruch 1, wobei die Nachrichtenkennung vom ersten Sensor bei Empfang einer Datennachricht durch den ersten Sensor über die erste Kommunikationsverbindung oder bei Erzeugung einer Datennachricht durch den ersten Sensor generiert wird.

3. Benachrichtigungsverfahren nach einem der Ansprüche 1 oder 2, wobei die Benachrichtigungsnachricht die Datennachricht aufweist.

4. Benachrichtigungsverfahren nach einem der vorhergehenden Ansprüche, wobei die Benachrichtigungsnachricht eine Kennung des Vorgangs enthält.

5. Benachrichtigungsverfahren nach einem der vorhergehenden Ansprüche, wobei die Benachrichtigungsnachricht ein Datum enthält.

6. Benachrichtigungsverfahren nach einem der vorhergehenden Ansprüche, wobei die mindestens eine Benachrichtigungsnachricht über eine zweite Kommunikationsverbindung übertragen wird.

7. Verarbeitungsverfahren von Benachrichtigungsnachrichten, die von mindestens einem ersten Sensor (NA) einer Vielzahl von Sensoren (N1, N2, N3) gesendet werden, die Knoten eines Netzwerks (R) bilden, wobei der erste Sensor fähig ist, mindestens eine Datennachricht über eine erste Kommunikationsverbindung (L1) an mindestens einen zweiten Sensor der Vielzahl zu senden und/oder von mindestens einem zweiten Sensor der Vielzahl zu empfangen,
**dadurch gekennzeichnet, dass** es die folgenden Schritte aufweist, die von einer Verarbeitungsvorrichtung durchgeführt werden:
- Erhalt einer Vielzahl von Benachrichtigungsnachrichten, die von mindestens einem Sensor der Vielzahl von Sensoren gesendet werden, wobei eine Benachrichtigungsnachricht mindestens einen Vorgang (OP) anzeigt, der sich auf mindestens eine Datennachricht bezieht und von einer Funktionsentität des mindestens einen Sensors durchgeführt wird, wobei die Benachrichtigungsnachricht eine Kennung des Sensors, eine Kennung der Funktionsentität und eine Kennung der Datennachricht aufweist; und
- Bestimmung mindestens eines Teils eines Pfads, der von mindestens einer Datennachricht innerhalb des Netzwerks zurückgelegt wird, durch Analyse von empfangenen Benachrichtigungsnachrichten.

8. Verarbeitungsverfahren nach Anspruch 7, wobei mindestens bestimmte der empfangenen Benachrichtigungsnachrichten eine Datennachricht enthalten, und wobei der Pfad mindestens einen ersten Pfadteil innerhalb eines Sensors der Vielzahl von Sensoren und einen zweiten Pfadteil zwischen einem ersten Sensor der Vielzahl und einem zweiten Sensor der Vielzahl aufweist, wobei der erste Pfadteil abhängig von Kennungen von Datennachrichten bestimmt wird, die in den Benachrichtigungsnachrichten enthalten sind, und der zweite Teil durch Vergleich von Datennachrichten bestimmt wird, die in den Benachrichtigungsnachrichten enthalten sind.

9. Sensor, der einen Knoten (NA) eines Netzwerks (R) von einer Vielzahl von Knoten (N1, N2, N3) des Netzwerks bildenden Sensoren bildet, wobei der Sensor (NA) fähig ist, mindestens eine Datennachricht über eine erste Kommunikationsverbindung (L1) an mindestens einen zweiten Sensor der Vielzahl zu senden und/oder von mindestens einem zweiten Sensor der Vielzahl zu empfangen,
**dadurch gekennzeichnet, dass** er ein Kommunikationsmodul (COM2) aufweist, das geeignet ist, eine Benachrichtigungsnachricht zu übertragen, die mindestens einen Vorgang (OP1) anzeigt, der sich auf die mindestens eine Datennachricht bezieht und von einer Funktionsentität des Sensors durchgeführt wird, wobei die Benachrichtigungsnachricht eine Kennung der Sensor, eine Kennung der Funktionsentität und eine Kennung der Nachricht aufweist.

10. Verarbeitungsvorrichtung (DT1), **dadurch gekennzeichnet, dass** sie aufweist:
- ein Modul zum Erhalt einer Vielzahl von Benachrichtigungsnachrichten, die von mindestens einem Sensor kommen, der einen Knoten eines Netzwerks (R) einer Vielzahl von Sensoren (N1, N2, N3) bildet, die Knoten des Netzwerks bilden, wobei der Sensor fähig ist, mindestens eine Datennachricht über eine erste Kommunikationsverbindung (L1) an mindestens einen zweiten Sensor der Vielzahl zu senden und/oder von mindestens einem zweiten Sensor der Vielzahl zu empfangen,
wobei eine Benachrichtigungsnachricht mindestens einen Vorgang (OP) anzeigt, der sich auf die mindestens eine Datennachricht bezieht und von einer Funktionsentität des Sensors durchgeführt wird, wobei die Benachrichtigungsnachricht eine Kennung des Sensors, eine Kennung der Funktionsentität und eine Kennung der Nachricht aufweist; und
- ein Verarbeitungsmodul, das geeignet ist, mindestens bestimmte der empfangenen Benachrichtigungsnachrichten zu analysieren, um mindestens einen Teil eines Pfads wiederherzustellen, der von mindestens einer Datennachricht innerhalb des Netzwerks zurückgelegt wird.

## Claims

1. Notification method implemented by at least one first sensor (NA) of a plurality of sensors (NA, NB, NC) forming nodes of a network (R), said first sensor (NA) being able to send to at least one second sensor of the plurality, and/or to receive from at least one second sensor of the plurality, at least one data message via a first communication link (L1),
**characterized in that** it comprises a step of transmission, by said first sensor, of at least one notification message signaling at least one operation (OP1) relating to at least one said data message and implemented by a functional entity of said first sensor, said notification message comprising an identifier of said first sensor, an identifier of said functional entity and an identifier of said data message.

2. Notification method according to Claim 1, in which said message identifier is generated by said first sensor during the reception by said first sensor of a data message via the first communication link or during the creation of a data message by the first sensor.

3. Notification method according to either of Claims 1 and 2, in which said notification message comprises said data message.

4. Notification method according to one of the preceding claims, in which said notification message comprises an identifier of said operation.

5. Notification method according to one of the preceding claims, in which said notification message comprises a date.

6. Notification method according to one of the preceding claims, in which said at least one notification message is transmitted via a second communication link.

7. Method for processing notification messages sent by at least one first sensor (NA) of a plurality of sensors (N1, N2, N3) forming nodes of a network (R), said first sensor being able to send to at least one second sensor of the plurality, and/or to receive from at least one second sensor of the plurality, at least one data message via a first communication link (L1),
**characterized in that** it comprises the following steps implemented by a processing device:
- obtaining of a plurality of notification messages sent by at least one sensor of the plurality of sensors, a said notification message signaling at least one operation (OP) relating to at least one said data message and implemented by a functional entity of said at least one sensor, said notification message comprising an identifier of said sensor, an identifier of said functional entity and an identifier of said data message; and
- determination of at least one part of a journey performed by at least one said data message within said network by analysis of notification messages received.

8. Processing method according to Claim 7, in which at least some of said notification messages received comprise a said data message and in which said journey comprises at least one first journey part within a sensor of the plurality of sensors and a second journey part between a first sensor of said plurality and a second sensor of said plurality, said first journey part being determined as a function of data message identifiers contained in said notification messages and said second part being determined by comparing data messages contained in said notification messages.

9. Sensor (NA) forming a node of a network (R) of a plurality of sensors forming nodes (N1, N2, N3) of said network, said sensor (NA) being able to send to at least one second sensor of the plurality, and/or to receive from at least one second sensor of the plurality, at least one data message via a first communication link (L1),
**characterized in that** it comprises a communication module (COM2), adapted to transmit a notification message signaling at least one operation (OP1) relating to at least one said data message and implemented by a functional entity of said sensor, said notification message comprising an identifier of said sensor, an identifier of said functional entity and an identifier of said message.

10. Processing device (DT1) **characterized in that** it comprises:
- a module for obtaining a plurality of notification messages originating from at least one sensor forming a node of a network (R) of a plurality of sensors (N1, N2, N3) forming nodes of said network, said sensor being able to send to at least one second sensor of the plurality, and/or to receive from at least one second sensor of the plurality, at least one data message via a first communication link (L1),
a said notification message signaling at least one operation (OP) relating to at least one said data message and implemented by a functional entity of said sensor, said notification message comprising an identifier of said sensor, an identifier of said functional entity and an identifier of said message; and
- a processing module adapted to analyze at least some of the notification messages received with a view to reconstructing at least one part of a journey performed by at least one said data message within said network.
